(19) Europäisches Patentamt

European Patent Office

Office européen des brevets

(11) **EP 0 693 809 B1**

(12) **EUROPÄISCHE PATENTSCHRIFT**

(45) Veröffentlichungstag und Bekanntmachung des Hinweises auf die Patenterteilung:
**06.10.1999 Patentblatt 1999/40**

(51) Int Cl.⁶: **H01S 3/06**, H01S 3/098, H01S 3/106, H01S 3/083

(21) Anmeldenummer: **95111416.4**

(22) Anmeldetag: **20.07.1995**

(54) **Modengekoppelter Faserringlaser**

Mode-locked fiber ring laser

Laser à fibre en anneau à blocage de mode

(84) Benannte Vertragsstaaten:
**CH DE ES FR GB IT LI SE**

(30) Priorität: **21.07.1994 DE 4425809**

(43) Veröffentlichungstag der Anmeldung:
**24.01.1996 Patentblatt 1996/04**

(73) Patentinhaber: **ALCATEL**
**75008 Paris (FR)**

(72) Erfinder: **Pfeiffer, Thomas, Dr.**
**D-70569 Stuttgart (DE)**

(74) Vertreter: **Menzietti, Domenico, Dipl.-Ing et al**
**Alcatel**
**Intellectual Property Department, Stuttgart**
**Postfach 30 09 29**
**70449 Stuttgart (DE)**

(56) Entgegenhaltungen:
**US-A- 5 274 659**

- **TAMURA K ET AL: "Soliton fiber ring laser stabilization and tuning with a broad intracavity filter" IEEE PHOTONICS TECHNOLOGY LETTERS, Bd. 6, Nr. 6, 1.Juni 1994, Seiten 697-699, XP000457224**
- **EIJI YOSHIDA ET AL: "Laser diose-pumped femtosecond erbium-doped fiber laser with a sub-ring cavity for repetition rate control" APPLIED PHYSICS LETTERS, Bd. 60, Nr. 8, 24.Februar 1992, Seiten 932-934, XP000292186**
- **ABRAHAM D ET AL: "Self-starting low-noise fiber soliton laser" OPTICS LETTERS, Bd. 18, Nr. 18, 15.September 1993, Seiten 1508-1510, XP000396925**

## Beschreibung

Die Erfindung betrifft einen modengekoppelten Faserringlaser nach dem Oberbegriff des Patentanspruchs 1.

In dem Artikel "40 GHz pulse generation using a widely tunable all-polarisation preserving erbium fibre ring laser" aus Electronic Letters, Oktober 1993, Seiten 1849 - 1850, von Th. Pfeiffer und G. Veith, ist ein aktiv modengekoppelter Faserringlaser zur Erzeugung optischer Pulse beschrieben. Der Faserringlaser beinhaltet eine Erbium dotierte Faser, eine Pumplichtquelle, einen optischen Isolator, ein optisches Filter und einen Mach-Zehnder Modulator. Zur Erzeugung der optischen Pulse wird der Mach-Zehnder Modulator durch eine elektrische Wechselspannungsquelle angesteuert. Bei Anliegen einer elektrischen Spannung am Mach-Zehnder Modulator verändert sich kurzzeitig der Brechungsindex in den Mach-Zehnder Armen, so daß es aufgrund von Interferenzerscheinungen zu einer Amplitudenmodulation des Signallichts kommt. Ist die elektrische Spannung eine elektrische Wechselspannung, bilden sich somit optische Pulse am Ausgang des Faserringlaser aus. Die Wechselspannungsquelle arbeitet im GHz-Bereich und muß sehr genau auf die Umlauffrequenz des Lichts im Ringresonator abgestimmt sein. Zusätzlich ist der Betrieb bei hohen Spannungen erforderlich, wodurch der Einsatz von elektrischen Hochfrequenzverstärkern notwendig ist.

Es ist deshalb Aufgabe der Erfindung, einen technisch einfacheren modengekoppelten Faserringlaser zur Erzeugung optischer Pulse zur Verfügung zu stellen.

Diese Aufgabe wird durch die Lehre des Patentanspruchs 1 gelöst. Vorteilhafte Ausgestaltungen sind den Unteransprüchen zu entnehmen. Ein besonderer Vorteil der Erfindung liegt aufgrund der Rückkopplung und der Verwendung von passiven Bauteilen in der hohen Stabilität der Pulsfolgefrequenz der optischen Pulse.

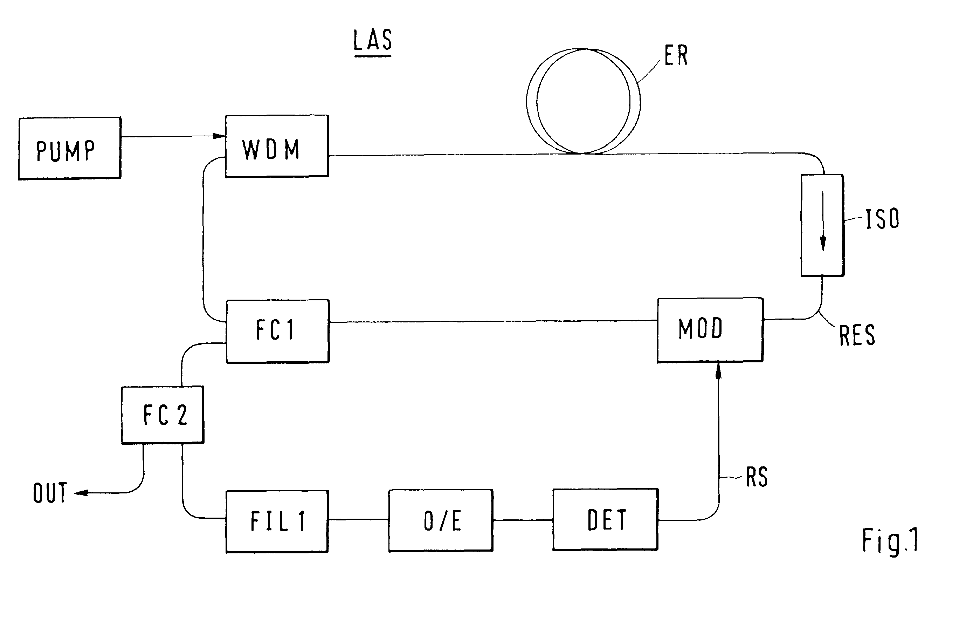

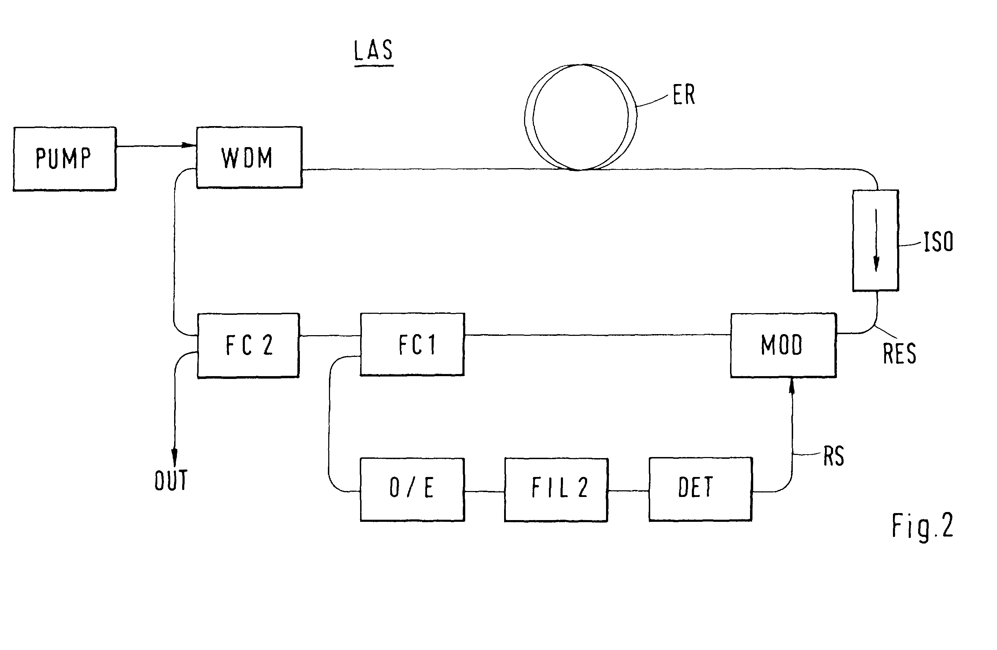

Im folgenden wird die Erfindung anhand von zwei Ausführungsbeispielen unter Zuhilfenahme der Figuren 1 und 2 erläutert. Es zeigen:

Fig. 1    eine schematische Darstellung eines Ausführungsbeispiels des erfindungsgemäßen modengekoppelten Faserringlasers mit einem optischen Filter und

Fig. 2    einen schematisch dargestellten Aufbau eines Ausführungsbeispiels des erfindungsgemäßen modengekoppelten Faserringlasers mit einem elektrischen Filter.

Zwei Ausführungsbeispiele der Erfindung werden nun anhand der Figuren 1 und 2 beschrieben. Fig. 1 zeigt einen erfindungsgemäßen passiv modengekoppelten Faserringlaser mit einem optischen Filter. Der passiv modengekoppelte Faserringlaser LAS beinhaltet eine Erbium dotierte Faser ER als laseraktives Medium, einen Faserresonator als Resonator, eine Pumplichtquelle PUMP als Energiequelle und einen optischen Modulator MOD zur Erzeugung der optischen Pulse. Ferner beinhaltet der passiv modengekoppelte Faserringlaser LAS einen optischen Isolator ISO, einen wellenlängenabhängigen Koppler WDM, zwei asymmetrische Faserkoppler FC1, FC2, ein optisches Filter FIL1, einen optisch/elektrischen Wandler O/E und einen Detektor DET.

Der Faserresonator ist als Ringresonator RES ausgeführt. In den Ringresonator RES sind seriell die Erbium dotierte Faser ER, der optische Isolator ISO, der optische Modulator MOD, der erste asymmetrische Faserkoppler FC1, der optische Isolator ISO und der wellenlängenabhängige Koppler WDM eingefügt.

Der wellenlängenabhängige Koppler WDM hat drei Anschlüsse. Zwei Anschlüsse dienen dem Einfügen in den Ringresonator RES. Der dritte Anschluß ist mit der Pumplichtquelle PUMP verbunden. Die Pumplichtquelle PUMP erzeugt Pumplicht, das über den wellenlängenabhängigen Koppler WDM in den Ringresonator eingekoppelt wird. Das Pumplicht hat eine kürzere Wellenlänge als das Signallicht.

Der optische Isolator ISO läßt Licht nur in eine Richtung fast verlustfrei passieren, in der anderen Richtung beträgt die Dämpfung des Lichts mehr als 30 dB. Der optische Isolator ISO dient u.a. dazu, eine Umlaufrichtung für das Signallicht festzulegen. Er hat zwei Anschlüsse und wird so in den Ringresonator RES eingefügt, daß seine Durchlaßrichtung gleich der gewünschten Laufrichtung des Signallichts ist. Im Ausführungsbeispiel läuft das Signallicht im Uhrzeigersinn.

Der erste asymmetrische Faserkoppler FC1 hat drei Anschlüsse. Zwei Anschlüsse dienen dem Einfügen in den Ringresonator RES. Der dritte Anschluß bildet den Anschluß für eine Rückkoppelschleife RS. Am dritten Anschluß wird asymmetrisch Signallicht aus dem Ringresonator RES ausgekoppelt. So wird z.B. 20 % des Signallichts aus dem Ringresonator RES ausgekoppelt und steht am Anschluß für die Rückkoppelschleife RS zur Verfügung, während die restlichen 80 % des Signallichts im Ringresonator RES verbleiben und den Betrieb des passiv modengekoppelten Faserringlasers LAS aufrechterhalten.

Der optische Modulator MOD hat drei Anschlüsse, zwei optische und einen elektrischen. Die beiden optischen Anschlüsse dienen dem Einfügen in den Ringresonator RES, der elektrische Anschluß dient der Ansteuerung. Der optische Modulator MOD ist z.B. ein Mach-Zehnder Modulator, wie z.B. aus IEEE Journal of Quantum Electronics, Vol. 27, No. 3, March 1991, pp. 654-667 bekannt. Durch Anlegen einer elektrischen Spannung am elektrischen Anschluß kann der Brechungsindex in den Mach-Zehnder Armen verändert werden und folglich das Signallicht im Ringresonator RES amplitudenmoduliert werden. Die Ansteuerung des optischen Modulators MOD erfolgt über die Rückkoppelschleife RS, die ein elektrisches Steuersignal, das aus einem Teil des Signallichts gewonnen wird, auf den elektrischen Anschluß des optischen Modulators MOD koppelt. Die Rückkoppelschleife RS beinhaltet den zweiten asymmetrischen Faserkoppler FC2, das optische Filter FIL1, den optisch/elektrischen Wandler O/E und den Detektor DET.

Der zweite asymmetrische Faserkoppler FC2 hat drei Anschlüsse. Zwei Anschlüsse dienen dem Einfügen in die Rückkoppelschleife RS. Der dritte Anschluß bildet den Ausgang OUT des modengekoppelten Faserringlasers LAS.

Das optische Filter FIL1 ist z.B. ein Fabry-Perot Filter. Es dient dazu, aus Licht mit mehreren Pulsfolgefrequenzen, d.h. aus Licht, das sich aus der Überlagerung mehrerer Pulsfolgefrequenzen zusammensetzt, die gewünschte Pulsfolgefrequenz herauszufiltern.

Der optisch/elektrische Wandler O/E beinhaltet z.B. eine Photodiode. Er wandelt ein optisches Eingangssignal in ein elektrisches Ausgangssignal.

Der Detektor DET ist z.B. ein Pegeldetektor. Der Pegel, d.h. die Amplitude, eines elektrischen Wechselspannungseingangssignals wird ermittelt und zu einem Ausgangsgleichspannungssignal, welches der Ansteuerung des optischen Modulators MOD dient, verarbeitet. Zusätzlich wird eine Signalanpassung auf den Aussteuerbereich des optischen Modulators MOD durchgeführt.

Nach dem Einschalten des passiv modengekoppelten Faserringlasers LAS, d.h. nach dem Einschalten der Pumplichtquelle PUMP bildet sich aus dem Rauschen heraus im Ringresonator RES Signallicht mit mehreren Pulsfolgefrequenzen durch stimulierte Emissionen in der Erbium dotierten Faser ER aus. Das Signallicht hat somit mehrere Lichtkomponenten mit unterschiedlichen Pulsfolgefrequenzen. Dabei wird der optische Modulator MOD mit einer konstanten Gleichspannung, der Vorspannung $U_v$, angesteuert. Die sich ausbildenden Pulsfolgefrequenzen sind ganzzahlige Vielfache der Umlauffrequenz f des Lichts im Ringresonator RES. Die Umlauffrequenz f bestimmt sich aus f = c/(L•n), mit c = Lichtgeschwindigkeit im Vakuum, L = Resonatorlänge und n = Brechungsindex. Mit z.B. L = 30 m und n = 1,5 ergibt sich eine Umlauffrequenz von f = 6,67 MHz. Bei einem Mach-Zehnder Modulator als optischer Modulator MOD ist die Abhängigkeit der Transmission T von der Steuerspannung U gegeben durch:

$$T \sim \cos^2\left(\frac{U}{U_\pi} \cdot \frac{\pi}{2}\right),$$

wobei $U_\pi$ eine konstante Spannung ist. Durch Anlegen einer konstanten Vorspannung $U_v$ im Bereich $0 < U_v <$

$U_\pi$ wird erreicht, daß der optische Modulator MOD als Dämpfungsglied arbeitet und der modengekoppelte Faserringlaser LAS somit in einem gedrosselten Betrieb arbeitet. Ein Teil des Signallichts wird über die asymmetrischen Faserkoppler FC1, FC2 dem optischen Filter FIL1 zugeführt. Das optische Filter FIL1 filtert die Lichtkomponente mit der gewünschten Pulsfolgefrequenz aus dem Teil des Signallichts heraus und führt das so gewonnene optische Signal dem optisch/elektrischen Wandler O/E zu. Der optisch/elektrische Wandler O/E wandelt das optische Signal in ein elektrisches Signal, welches als Eingangssignal für den Detektor DET dient. Die Amplitude des elektrischen Signals bestimmt die Detektorausgangsspannung, die die Steuerspannung U des optischen Modulators MOD darstellt. Liegt kein elektrisches Signal am Detektor DET an, so hat die Steuerspannung U den Wert der Vorspannung $U_v$. Bei maximaler Amplitude des elektrischen Signals am Detektor hat die Steuerspannung U den Wert Null, d.h. die Transmission T hat den Wert Eins und der optische Modulator MOD fungiert nur noch als Durchschaltglied. Der Wertebereich der Steuerspannung U ist demnach gegeben durch $0 \le U \le U_v$. Durch die Rückkoppelschleife RS wird erreicht, daß sich Signallicht mit ausschließlich der gewünschten Pulsfolgefrequenz im Ringresonator RES ausbildet. Im Mittel ist die Amplitude der sich ausbildenden Lichtkomponenten nahezu konstant. Bedingt durch eine statistische Verteilung bilden sich kurzzeitig Zustände aus, bei denen die Amplitude einzelner Lichtkomponenten höher als die Amplitude der restlichen Lichtkomponenten ist. Tritt der Zustand, bei dem die Amplitude der Lichtkomponente mit der gewünschten Pulsfolgefrequenz hoch gegenüber der Amplitude der restlichen Lichtkomponente ist, auf, so wird über die Rückkoppelschleife RS die Transmission T im optischen Modulator MOD erhöht. Die erhöhte Transmission T führt zu einem weiteren Anstieg der Amplitude der Lichtkomponente mit der gewünschten Pulsfolgefrequenz, welche wiederum zu einer erhöhten Transmission T führt. Ein stabiler Zustand ist erreicht, wenn der Transmissionswert T = 1 ist und im Ringresonator RES ausschließlich optische Pulse mit der gewünschten Pulsfolgefrequenz zirkulieren. Mit einem einstellbaren optischen Filter FIL1 kann der modengekoppelte Faserringlaser LAS somit zur Erzeugung optischer Pulse, deren Pulsfolgefrequenz bedingt einstellbar ist, verwendet werden. Die bedingte Einstellbarkeit der Pulsfolgefrequenz resultiert aus der Tatsache, daß die Pulsfolgefrequenz einem ganzzahligen Vielfachen der Umlauffrequenz f des Lichts im Ringresonator RES entsprechen muß.

Fig. 2 zeigt nun einen erfindungsgemäßen passiv modengekoppelten Faserringlaser mit einem elektrischen Filter. Der passiv modengekoppelte Faserringlaser LAS ist wie der anhand von Fig. 1 beschriebene Laser ein Faserringlaser mit Rückkoppelschleife. Bis auf die Anordnung des zweiten Faserkopplers FC2 und die Elemente der Rückkoppelschleife RS sind der passiv modengekoppelte Faserringlaser LAS und der anhand von Fig. 1 beschriebene Laser identisch. Die Rückkoppelschleife RS beinhaltet einen optisch/elektrischen Wandler O/E, ein elektrisches Filter FIL2 und einen Detektor DET. Der zweite Faserkoppler FC2 zur Erzeugung des Ausgangs OUT des modengekoppelten Faserringlasers LAS ist anstatt in die Rückkoppelschleife RS (wie im anhand von Fig. 1 beschriebenen Laser) in den Ringresonator RES eingefügt.

Das elektrische Filter FIL2 ist z.B. ein Bandpaßfilter. Es dient dazu, aus einem elektrischen Signal die gewünschte Pulsfolgefrequenz herauszufiltern.

Nach dem Einschalten des passiv modengekoppelten Faserringlasers LAS bildet sich im Ringresonator RES Signallicht mit mehreren Pulsfolgefrequenzen durch stimulierte Emissionen in der Erbium dotierten Faser aus. Das Signallicht hat somit mehrere Lichtkomponenten mit unterschiedlichen Pulsfolgefrequenzen. Dabei wird der optische Modulator MOD (Mach-Zehnder-Modulator) mit einer konstanten Vorspannung $U_v$ angesteuert. Ein Teil des Signallichts wird über den asymmetrischen Faserkoppler FC1 dem optisch/elektrischen Wandler O/E zugeführt. Der optische/elektrische Wandler O/E wandelt das optische Signal in ein elektrisches Signal, welches als Eingangssignal für das elektrische Filter FIL2 dient. Das elektrische Signal hat mehrere elektrische Signalkomponenten mit unterschiedlichen Pulsfolgefrequenzen. Das elektrische Filter filtert eine elektrische Signalkomponente aus dem elektrischen Signal aus und führt das so gewonnene elektrische Wechselspannungssignal dem Detektor zu. Die Amplitude des elektrischen Wechselspannungssignals bestimmt die Detektorausgangsspannung, die die Steuerspannung U des optischen Modulators MOD darstellt. Liegt kein elektrisches Signal am Detektor DET an, so hat die Steuerspannung U den Wert der Vorspannung $U_v$. Bei maximaler Amplitude des elektrischen Signals am Detektor hat die Steuerspannung U den Wert Null, d.h. die Transmission T hat den Wert Eins und der optische Modulator MOD fungiert nur noch als Durchschalteglied. Der Wertebereich der Steuerspannung U ist demnach gegeben durch $0 \leq U \leq U_v$. Durch die Rückkoppelschleife RS wird erreicht, daß sich Signallicht mit ausschließlich der gewünschten Pulsfolgefrequenz im Ringresonator RES ausbildet. Im Mittel ist die Amplitude der sich ausbildenden elektrischen Signalkomponenten nahezu konstant. Bedingt durch eine statistische Verteilung bilden sich kurzzeitig Zustände aus, bei denen die Amplitude einzelner elektrischer Signalkomponenten höher als die Amplitude der restlichen elektrischen Signalkomponenten ist. Tritt der Zustand, bei dem die Amplitude der elektrischen Signalkomponente mit der gewünschten Pulsfolgefrequenz hoch gegenüber der Amplitude der restlichen elektrischen Signalkomponenten ist, auf, so wird über die Rückkoppelschleife RS die Transmission T im optischen Modulator MOD erhöht. Die erhöhte Transmission T führt zu einem weiteren Anstieg der Amplitude der elektrischen Signalkomponente mit der gewünschten Pulsfolgefrequenz, welche wiederum zu einer erhöhten Transmission T führt. Ein stabiler Zustand ist erreicht, wenn der Transmissionswert T = 1 ist und im Ringresonator RES ausschließlich optische Pulse mit der gewünschten Pulsfolgefrequenz zirkulieren. Mit einem einstellbaren elektrischen Filter FIL2 kann der passiv modengekoppelte Faserringlaser LAS somit zur Erzeugung optischer Pulse, deren Pulsfolgefrequenz bedingt einstellbar ist, verwendet werden. Die bedingte Einstellbarkeit der Pulsfolgefrequenz resultiert aus der Tatsache, daß die Pulsfolgefrequenz einem ganzzahligen Vielfachen der Umlauffrequenz f des Lichts im Ringresonator RES entsprechen muß.

Bei den Ausführungsbeispielen sind die verwendeten Fasern aus Stabilitätsgründen vorteilhafterweise polarisationserhaltende Einmodenfasern. Die polarisationserhaltenden Einmodenfasern verhindern eventuell durch Polarisation bedingte Interferenzerscheinungen, die die Funktionsweise des modengekoppelten Faserringlasers LAS beeinträchtigen könnten.

Vorteilhafterweise kann in beiden Ausführungsbeispielen zur Stabilisierung des passiv modengekoppelten Faserringlasers LAS jeweils ein optisches Filter in den Resonatorkreis eingefügt werden, z.B. zwischen optischem Isolator ISO und optischem Modulator MOD. Dieses optische Filter sollte breitbandig und für Signallicht in einem, z.B. 2-3 nm breiten Fenster durchlässig sein. So könnte das optische Filter z.B. für Signallicht der Wellenlänge 1530 nm +/- 1,5 nm durchlässig sein.

Im ersten Ausführungsbeispiel kann der Pegeldetektor im Detektor DET eingespart werden, wenn man als optisch/elektrischen Wandler O/E eine "langsame" Photodiode einsetzt, d.h. eine Photodiode, deren Empfindlichkeit weit geringer als die Pulsfolgefrequenz ist. Auf diese Weise wird die Pegelmessung bereits durch die Photodiode durchgeführt. Das Ausgangssignal der Photodiode braucht dann nur noch an den Aussteuerbereich des optischen Modulators MOD angepaßt werden.

In den Ausführungsbeispielen ist ein passiv modengekoppelter Faserringlaser LAS mit einer Erbium dotierten Faser ER als laseraktives Medium beschrieben. Anstelle der Erbium dotierten Faser kann auch eine mit einem anderen Element aus der Gruppe der seltenen Erden dotierte Faser ER als laseraktives Medium verwendet werden.

Ferner sind in den Ausführungsbeispielen im wesentlichen nur die für das Verständnis erforderlichen Teile und Baugruppen des passiv modengekoppelten Faserringlasers LAS erwähnt. Auf weitere Teile und Baugruppen, wie z.B. zusätzliche optische Isolatoren, Polarisatoren, optische Filter, optische Dämpfer oder Synchronisationseinrichtungen, deren Verwendung, Anordnung, Vorteile oder gar Notwendigkeit dem Fachmann z.B. aus der Druckschrift Electronic Letters 24th October 1991, Vol. 27, No. 22 bekannt sind, wurde in der Beschreibung nicht näher eingegangen.

**Patentansprüche**

1. Modengekoppelter Faserringlaser (LAS), mit einem laseraktiven Medium (ER) mit einer Pumplichtquelle (PUMP), mit einem Ringresonator (RES), in dem nach dem Einschalten der Pumplichtquelle ein Signallicht mit mehreren Pulsfolgefrequenzen gebildet wird, mit einem optischen Modulator (MOD) zur Erzeugung optischer Pulse und mit einer Auskoppelvorrichtung (FC1) zum Auskoppeln von Signallicht,
   **dadurch gekennzeichnet**, der Faserringlaser über eine Rückkoppelschleife verfügt und der Aufbau des Faserringlasers derart gestaltet ist, daß der optische Modulator (MOD) durch ein Steuersignal angesteuert wird und das Steuersignal über die Rückkoppelschleife (RS) aus einem Teil des Signallichts mit einen gewünschten Pulsfolgefrequenz abgeleitet wird.

2. Modengekoppelter Faserringlaser (LAS) nach Anspruch 1, dadurch gekennzeichnet, daß in die Rückkoppelschleife (RS) ein optisches Filter (FIL1) eingefügt ist.

3. Modengekoppelter Faserringlaser (LAS) nach Anspruch 1, dadurch gekennzeichnet, daß in die Rückkoppelschleife (RS) ein elektrisches Filter (FIL2) eingefügt ist.

4. Modengekoppelter Faserringlaser (LAS) nach Anspruch 2 oder 3, dadurch gekennzeichnet, daß die durch das Filter (FIL1, 2) herausfilterbare Pulsfolgefrequenz einstellbar ist.

5. Modengekoppelter Faserringlaser (LAS) nach Anspruch 1, dadurch gekennzeichnet, daß der optische Modulator (MOD) durch ein elektrisches Steuersignal ansteuerbar ist, und daß in die Rückkoppelschleife (RS) ein optisch/elektrischer Wandler (O/E) eingefügt ist.

6. Modengekoppelter Faserringlaser (LAS) nach Anspruch 5, dadurch gekennzeichnet, daß das elektrische Steuersignal eine Gleichspannung ist.

7. Modengekoppelter Faserringlaser (LAS) nach Anspruch 1, dadurch gekennzeichnet, daß in den Ringresonator (RES) ein optisches Filter eingefügt ist.

8. Modengekoppelter Faserringlaser (LAS) nach Anspruch 1, dadurch gekennzeichnet, daß das laseraktive Medium (ER) eine mit einem Element aus der Gruppe der seltenen Erden dotierte Faser ist.

9. Modengekoppelter Faserringlaser (LAS) nach Anspruch 1, dadurch gekennzeichnet, daß die verwendeten Fasern polarisationserhaltende Einmodenfasern sind.

10. Modengekoppelter Faserringlaser (LAS) nach Anspruch 1, dadurch gekennzeichnet, daß in den Ringresonator (RES) ein oder mehrere optische Isolatoren (ISO) eingefügt sind.

**Claims**

1. A mode-locked fiber ring laser (LAS) comprising an active laser medium (ER), a pump-light source (PUMP), a ring resonator (RES) in which after turn-on of the pump-light source, signal light having several pulse repetition frequencies is formed, an optical modulator (MOD) for generating optical pulses, and a coupling device (FC1) for coupling out signal light,
   **characterized in** that the fiber ring laser has a feedback loop and is configured in such a way that the optical modulator (MOD) is operated by a driving signal and that the driving signal is derived via the feedback loop (RS) from a portion of the signal light having a desired pulse repetition frequency.

2. A mode-locked fiber ring laser (LAS) as claimed in claim 1, characterized in that the feedback loop (RS) includes an optical filter (FIL1).

3. A mode-locked fiber ring laser (LAS) as claimed in claim 1, characterized in that the feedback loop (RS) includes an electrical filter (FIL2).

4. A mode-locked fiber ring laser (LAS) as claimed in claim 2 or 3, characterized in that the pulse repetition frequency which can be filtered out by the filter (FIL1, FIL2) is settable.

5. A mode-locked fiber ring laser (LAS) as claimed in claim 1, characterized in that the optical modulator (MOD) is operable by an electric driving signal, and that the feedback loop (RS) includes an optical-to-electrical transducer (O/E).

6. A mode-locked fiber ring laser (LAS) as claimed in claim 5, characterized in that the electric driving signal is a direct voltage.

7. A mode-locked fiber ring laser (LAS) as claimed in claim 1, characterized in that the ring resonator (RES) includes an optical filter.

8. A mode-locked fiber ring laser (LAS) as claimed in claim 1, characterized in that the active laser medium (ER) is a fiber doped with a rare-earth element.

9. A mode-locked fiber ring laser (LAS) as claimed in claim 1, characterized in that the fibers used are polarization-preserving single-mode fibers.

10. A mode-locked fiber ring laser (LAS) as claimed in claim 1, characterized in that the ring resonator (RES) includes one or more optical isolators (ISO).

## Revendications

1. Laser à modes verrouillés à fibre en anneau (LAS) avec un milieu actif (ER), avec une source de pompage optique (PUMP), avec un résonateur en anneau (RES) dans lequel une lumière signal avec plusieurs fréquences de trains d'impulsions est formée après que la source de pompage optique a été activée, avec un modulateur optique (MOD) pour générer des impulsions optiques, et avec un dispositif de déclenchement pour déclencher la lumière signal, caractérisé en ce que le laser à fibre en anneau dispose d'une boucle de rétroaction (RS) et que la structure du laser à fibre en anneau est conçue de telle sorte que le modulateur optique (MOD) est excité par un signal de commande et le signal de commande est dérivé d'une partie de la lumière signal avec une fréquence de trains d'impulsions souhaitée par l'intermédiaire de la boucle de rétroaction (RS).

2. Laser à modes verrouillés à fibre en anneau (LAS) selon la revendication 1, caractérisé en ce que qu'un filtre optique (FIL1) est inséré dans la boucle de rétroaction (RS).

3. Laser à modes verrouillés à fibre en anneau (LAS) selon la revendication 1, caractérisé en ce que qu'un filtre électrique (FIL2) est inséré dans la boucle de rétroaction (RS).

4. Laser à modes verrouillés à fibre en anneau (LAS) selon la revendication 2 ou la revendication 3, caractérisé en ce que la fréquence de trains d'impulsions pouvant être extraite par filtrage avec le filtre (FIL1, 2) est réglable.

5. Laser à modes verrouillés à fibre en anneau (LAS) selon la revendication 1, caractérisé en ce que le modulateur optique (MOD) peut être excité par un signal de commande électrique et en ce qu'un convertisseur optique/électrique (O/E) est inséré dans la boucle de rétroaction (RS).

6. Laser à modes verrouillés à fibre en anneau (LAS) selon la revendication 5, caractérisé en ce que le signal de commande électrique est une tension continue.

7. Laser à modes verrouillés à fibre en anneau (LAS) selon la revendication 1, caractérisé en ce que qu'un filtre optique est inséré dans le résonateur en anneau (RES).

8. Laser à modes verrouillés à fibre en anneau (LAS) selon la revendication 1, caractérisé en ce que le milieu actif (ER) est une fibre dopée avec un élément choisi dans le groupe des terres rares.

9. Laser à modes verrouillés à fibre en anneau (LAS) selon la revendication 1, caractérisé en ce que les fibres utilisées sont des fibres unimodales à maintien de polarisation.

10. Laser à modes verrouillés à fibre en anneau (LAS) selon la revendication 1, caractérisé en ce que un ou plusieurs isolateurs (ISO) sont insérés dans le résonateur en anneau (RES).

Fig.1

Fig.2

EP 0 693 809 B1